# EUROPÄISCHE PATENTSCHRIFT

(11) **EP 0 547 344 B1**
(45) Veröffentlichungstag und Bekanntmachung des Hinweises auf die Patenterteilung: **10.01.1996**
(21) Anmeldenummer: 92118584.9
(22) Anmeldetag: 30.10.1992
(51) Int. Cl.: C08L 23/16, C08K 3/36, C08K 5/54, C08K 9/06

(54) **Vulkanisierbare EPDM-Kautschukmischungen**
Vulcanizable EPDM rubber compositions
Composition vulcanisable de caoutchouc de EPDM

(30) Priorität: 19.12.1991 DE 4141975
(43) Veröffentlichungstag der Anmeldung: 23.06.1993
(73) Patentinhaber: Degussa Aktiengesellschaft, D-60311 Frankfurt (DE)
(72) Erfinder: Wolff, Siegfried, Dr., W-5303 Bornheim-Merten (DE); Panenka, Rainer, Dr., W-5040 Brühl (DE); Haddeman, Marinus, W-5060 Berg.-Gladbach 1 (DE); Nakahama, Hidenari, Ichihara-shi, Chiba (JP)

(56) Entgegenhaltungen:
- EP-A- 0 278 157
- EP-A- 0 442 143
- EP-A- 0 494 355
- WO-A-86/02088
- US-A- 3 873 489

## Beschreibung

### Einführung und Hintergrund

Die vorliegende Erfindung betrifft vulkanisierbare Kautschukmischungen, die ein EPDM-Copolymer enthalten und sich durch ausgezeichnete Hitze- und Ermüdungsbeständigkeit, ausgezeichnete dynamische Eigenschaften und niedrige tan δ-Werte auszeichnen und sich für Anwendungen wie Autoreifen und Schwingungsdämpfer eignen sowie Vulkanisate, die durch Vulkanisieren der obengenannten Kautschukmischungen hergestellt wurden. Dienkautschuke wie z.B. Naturkautschuk (NR), Styrolbutadienkautschuk (SBR) und Butadienkautschuk (BR) sind dafür bekannt, daß sie über ausgezeichnete dynamische Eigenschaften und Ermüdungsbeständigkeit verfügen und als Rohstoffe in Autoreifen und Schwingungsdämpfer eingesetzt werden. In der jüngsten Vergangenheit haben sich die Anwendungsbedingungen für diese Gummiartikel in solchem Maß geändert, daß Verbesserungen der Hitze- und Witterungsbeständigkeit dieser Gummiartikel erforderlich wurden.

In Autoreifen erfordern die Reifenlauffläche und die Seitenwand besondere Witterungsbeständigkeit. Bislang verfügte man jedoch über keinen Kautschuk, der die ausgezeichnete Ermüdungsbeständigkeit und die dynamischen Eigenschaften des bekannten Dienkautschuks aufweist und gleichzeitig witterungsbeständig ist.

Daher wurden verschiedene Kautschukverschnitte von Dienkautschuk, der über eine ausgezeichnete dynamische Ermüdungsbeständigkeit und ausgezeichnete dynamische Eigenschaften verfügt, mit EPT (EPDM), der eine ausgezeichnete Hitze- und Witterungsbeständigkeit besitzt, untersucht. Da sich jedoch das Niveau der dynamischen Eigenschaften von EPT von dem des Dienkautschuks unterscheidet, konnte bislang kein Kautschukverschnitt mit gleichbleibenden Eigenschaften hergestellt werden.

Die dynamischen Eigenschaften eines Autoreifens werden danach beurteilt, ob das Material den Benzinverbrauch erhöht, wobei der tan δ-Wert (Verlustfaktor) als Index dient. Je niedriger der tan δ-Wert ist, desto besser sind die dynamischen Eigenschaften.

Andererseits sind die existierenden schwingungsdämpfenden Kautschukprodukte auf Naturkautschukbasis, einem Dienkautschuk, in Schwingungsdämpfern für den Automobilbereich nicht in der Lage, unter den Bedingungen hoher Temperaturen im Motorraum eine Ermüdungsbeständigkeit zu gewährleisten.

Daher besteht eine große Nachfrage nach einem neuen Kautschukmaterial, das sowohl über ausgezeichnete Hitzebeständigkeit als auch ausgezeichnete dynamische Eigenschaften und Ermüdungsbeständigkeit verfügt, welche denen des Dienkautschuks gleichwertig oder überlegen sind.

Um die Ermüdungsbeständigkeit zu verbessern, muß das Material für gewöhnlich in der Lage sein, mittels eines bestimmten Mechanismus einer aufgebrachten Kraft nachzugeben. Zu diesem Zweck ist es notwendig, eher von Vernetzung in Form polysulfidischer als monosulfidischer Bindungen auszugehen. Eine entsprechende Vernetzungsdichte muß ebenfalls gewährleistet sein.

Andererseits muß zur Verbesserung der dynamischen Eigenschaften die Vernetzungsdichte erhöht werden.

Beim herkömmlichen Stand der Technik führte der Versuch, die dynamischen Eigenschaften von EPT mit jenen von Dienkautschuk, z.B. NR, in Einklang zu bringen, zu überhöhter Vernetzungsdichte mit entsprechender Verschlechterung der Ermüdungsbeständigkeit. Es war somit nicht möglich, die dynamischen Eigenschaften mit einer Ermüdungsbeständigkeit in Einklang zu bringen.

Die dynamischen Eigenschaften von Schwingungsdämpfern werden danach beurteilt, ob diese eine niedrige dynamischen Verstärkung der Schwingungen aufweisen. Da die dynamische Verstärkung dem tan δ-Wert in etwa proportional ist, kann tan δ als ihr Index herangezogen werden.

Der Stand der Technik bietet bisher keinen Lösungsansatz unter Verwendung von EPDM.So sind aus der EP-A2-00278 157 EPDM-haltige Kautschukmischungen bekannt, die neben Kieselsäure als Füllstoff u. a. Organopolysiloxane und Thiocarbamyl-Gruppen-haltige Organosilanverbindungen enthalten.

Die EP-A 0442 143 betrifft ein Verfahren zur Herstellung von mit Organosilanen modifizierten Füllstoffen und deren vorteilhafte Verwendung in vulkanisierbaren Kautschukmischungen.

Einen Hinweis auf das zu lösende Problem enthält der Stand der Technik jedoch nicht.

Die US-A-3 873 489 beschreibt vulkanisierbare Kautschukmischungen enthaltend z.B. einen nichtkonjugierten Ethylen-Propylen-Dien-Kautschuk, Schwefel, Silikate mit einer spezifischen Oberfläche von 5 bis 1000 m/g sowie Alkoxysilanverbindungen.

Wir, die Erfinder, haben die obengenannten Probleme untersucht und festgestellt, daß sowohl die dynamischen Eigenschaften als auch die Ermüdungsbeständigkeit, die in umgekehrtem Verhältnis zueinander stehen, verbessert werden können, wenn man einen nichtkonjugierten Ethylen-Propylen-Dien-Kautschuk mit seiner ausgezeichneten Hitzebeständigkeit, eine spezifische Alkoxysilanverbindung und eine spezifische amorphe Kieselsäure einsetzt, wobei die Alkoxysilanverbindung die Wechselwirkung zwischen der amorphen Kieselsäure und dem Polymer fördert und den Ethylen-Propylen-Dien-Kautschuk verbessert.

### Gegenstand der Erfindung

Ein Gegenstand dieser Erfindung ist es, die obengenannten, mit der herkömmlichen Technologie verbundenen Probleme zu lösen und Kautschukmischungen herzustellen, deren Ermüdungsbeständigkeit und dynamische Eigenschaften denen des Dienkautschuk, wie z.B. Naturkautschuk, gleichwertig sind und die darüberhinaus ausgezeichnete Hitze- und Witterungsbeständigkeit besitzen.

Ein weiterer Gegenstand dieser Erfindung ist die Herstellung von Vulkanisaten aus obengenannten Kautschukmischungen.

### Zusammenfassung der Erfindung

Die vulkanisierbaren EPDM-Kautschukmischungen gemäß dieser Erfindung sind dadurch gekennzeichnet, daß sie einen nichtkonjugierten Ethylen-Propylen-Dien-Kautschuk (EPDM) enthalten, ein Schwefel oder Schwefelverbindungen enthaltendes, Vernetzungssystem und wenigstens eine der Alkoxysilanverbindungen entsprechend der folgenden allgemeinen Formeln (I) oder (II) sowie Kieselsäure und/oder ein Silikat mit einer spezifischen Oberfläche von 50 bis 100 m/g (BET-Adsorption: ISO 5794/1, Annex D): 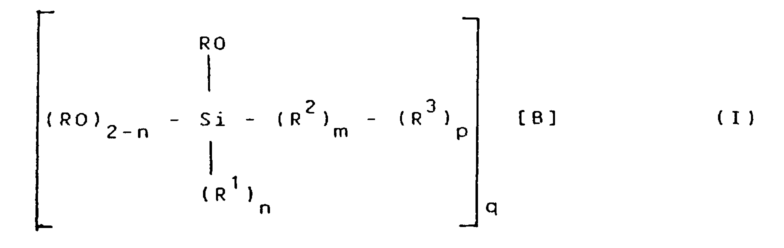 worin bedeuten R eine Alkylgruppe mit 1 bis 4 Kohlenstoffatomen oder eine Alkoxygruppe mit 1 bis 4 Kohlenstoffatomen, R¹ eine Alkylgruppe mit 1 bis 4 Kohlenstoffatomen oder eine Phenylgruppe, n 0, 1 oder 2, R einen zweiwertigen geraden oder verzweigten Kohlenwasserstoffrest mit 1 bis 6 Kohlenstoffatomen, R³ eine Arylengruppe mit 6 bis 12 Kohlenstoffatomen, m und p 0 oder 1 mit der Maßgabe, daß p und m nicht gleichzeitig 0 bedeuten, q 1 oder 2, B-SCN oder -SH, wenn q=1, und -Sₓ- (wobei x eine ganze Zahl zwischen 2 und 8 ist), wenn q=2. 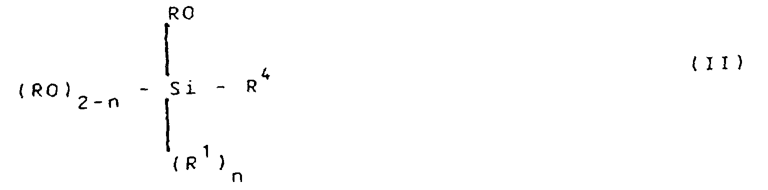 worin bedeuten R eine Alkylgruppe mit 1 bis 4 Kohlenstoffatomen oder eine Alkoxygruppe mit 1 bis 4 Kohlenstoffatomen, R¹ eine Alkylgruppe mit 1 bis 4 Kohlenstoffatomen oder eine Phenylgruppe, n 0, 1 oder 2 und R⁴ einen einwertigen geraden oder verzweigten, ungesättigten Kohlenwasserstoffrest mit 2 bis 20 Kohlenstoffatomen.

In den Kautschukmischungen entsprechend dieser Erfindung wird vorzugsweise ein Ethylen-Propylen-5-Ethyliden-2-Norbornen-Copolymer mit einer Mooney-Viskosität (MS₁₊₄, 160 °C) zwischen 40 und 80 als der obengenannte nichtkonjugierte Ethylen-Propylen-Dien-Kautschuk eingesetzt.

Die Vulkanisate gemäß dieser Erfindung sind dadurch gekennzeichnet, daß sie durch Vulkanisation der Kautschukmischungen entsprechend dieser Erfindung hergestellt werden. Die erfindungsgemäßen Kautschukmischungen und die aus diesen Mischungen hergestellten Vulkanisate besitzen dem Dienkautschuk, wie z.B. NR, gleichwertige Ermüdungsbeständigkeit und dynamische Eigenschaften sowie eine ausgezeichnete Hitze- und Witterungsbeständigkeit.

### Spezifische Erläuterungen / Konkrete Beschreibung der Erfindung

Die erfindungsgemäßen Kautschukmischungen und die aus diesen Mischungen hergestellten Vulkanisate werden im folgenden veranschaulicht. Als erstes werden die erfindungsgemäßen Kautschukmischungen beschrieben.

Die Kautschukmischungen gemäß dieser Erfindung enthalten einen nichtkonjugierten Ethylen-Propylen-Dien-Kautschuk, eine spezifische Alkoxysilanverbindung und eine spezifische amorphe Kieselsäure und/oder ein Silikat.

### Ethylen-Propylen-Dien-Kautschuk

Der in dieser Erfindung verwendete Ethylen-Propylen-Dien-Kautschuk enthält für gewöhnlich 50 bis 83 mol%, vorzugsweise 50 bis 73 mol% Ethylen und für gewöhnlich 50 bis 17 mol%, vorzugsweise 50 bis 27 mol% Propylen.

Zu den obengenannten nichtkonjugierten Dienen zählen beispielsweise kettenförmige nichtkonjugierte Diene wie 1,4-Hexadien, 1,6-Octadien, 2-Methyl-1,5-Hexadien, 6-Methyl-1,5-Heptadien und 7-Methyl-1,6-Octadien;
cyclische nichtkonjugierte Diene wie Cyclohexadien, Dicyclopentadien, Methyltetrahydroinden, 5-Vinylnorbornen, 5-Ethyliden-2-Norbornen, 5-Methylen-2-Norbornen, 5-Isopropyliden-2-Norbornen und 6-Chlormethyl-5-lsopropenyl-2-Norbornen;
und Triene wie z.B. 2,3-Diisopropyliden-5-Norbornen, 2-Ethyliden-3-lsopropyliden-5-Norbornen, 2-Propenyl-2,2-Norbornadien, 1,3,7-Octatrien und 1,4,9-Decatrien.

Von diesen werden vorzugsweise 1,4-Hexadien und cyclische nichtkonjugierte Diene, insbesondere 5-Ethyliden-2-Norbornen eingesetzt. Wird 5-Ethyliden-2-Norbornen als nichtkonjugiertes Dien gemäß dieser Erfindung eingesetzt, so kann man Kautschukmischungen und Vulkanisate mit überragender Ermüdungsbeständigkeit erhalten. Der erfindungsgemäße nichtkonjugierte Ethylen-Propylen-Dien-Kautschuk hat für gewöhnlich eine Jodzahl, die einen Index für den Gehalt an nichtkonjugiertem Dien darstellt, zwischen 8 und 30, vorzugsweise zwischen 8 und 25.

Der erfindungsgemäße nichtkonjugierte Ethylen-Propylen-Dien-Kautschuk hat eine Mooney-Viskosität, MS₁₊₄, 160 °C, zwischen 40 und 80, vorzugsweise zwischen 50 und 80. Wird ein nichtkonjugierter Ethylen-Propylen-Dien-Kautschuk mit einer Mooney-Viskosität von MS₁₊₄, 160 °C, der in den obenbeschriebenen Bereich fällt, gemäß dieser Erfindung verwendet, so können Kautschukmischungen und Vulkanisate hergestellt werden, deren Ermüdungsbeständigkeit der von Dienkautschuk, wie z.B. Naturkautschuk, gleichwertig oder überlegen ist.

Ein nichtkonjugierter Ethylen-Propylen-Dien-Kautschuk mit einer Mooney-Viskosität, MS₁₊₄, 100 °C, zwischen 60 und 200 wird ebenfalls in den erfindungsgemäßen Mischungen verwendet.

Obgleich der obengenannte Ethylen-Propylen-Dien-Kautschuk als einziger Kautschukbestandteil eingesetzt werden kann, kann auch ein Verschnitt des obengenannten Copolymers mit einem Dienkautschuk verwendet werden.

Zu den obengenannten Dienkautschuken gehören u.a. Naturkautschuk (NR), Isopropylenkautschuk (IR), Butadienkautschuk (BR), Styrolbutadienkautschuk (SBR), Acrylnitril-Butadienkautschuk (NBR) und Chloroprenkautschuk (CR). Von diesen werden Naturkautschuk und Isoprenkautschuk bevorzugt. Die obengenannten Dienkautschuke werden entweder allein oder in Kombination eingesetzt. Der in dieser Erfindung verwendete Dienkautschuk wird für gewöhnlich in einer Menge von 20 bis 50 GT (Gewichtsteilen) je 100 GT des Gesamtanteils an Ethylen-Propylen-Dien-Kautschuk eingesetzt.

### Alkoxysilanverbindung

Die erfindungsgemäße Alkoxysilanverbindung wird durch die allgemeine Formel (I) oder (II) wiedergegeben und spielt als Verstärkungsadditiv eine wichtige Rolle: 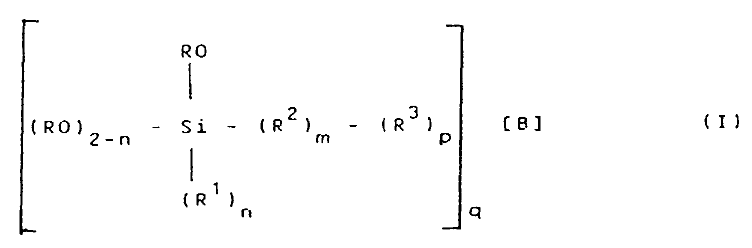 worin bedeuten R eine Alkylgruppe mit 1 bis 4 Kohlenstoffatomen oder eine Alkoxygruppe mit 1 bis 4 Kohlenstoffatomen, R¹ eine Alkylgruppe mit 1 bis 4 Kohlenstoffatomen oder eine Phenylgruppe, n 0, 1 oder 2, R ein geradkettiges oder verzweigtes Alkylen mit 1 bis 6 Kohlenstoffatomen, R³ eine Arylengruppe mit 6 bis 12 Kohlenstoffatomen, m und p 0 oder mit der Maßgabe, daß p und m nicht gleichzeitig 0 bedeuten, q 1 oder 2, B -SCN oder -SH, wenn q=1, und -Sₓ- (wobei x eine ganze Zahl zwischen 2 und 8 ist), wenn q=2. 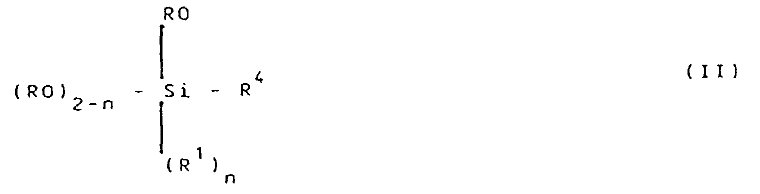 worin R, R¹ und n die für die obenstehende allgemeine Formel definierte Bedeutung haben und R⁴ einen einwertigen geraden oder verzweigten, ungesättigten Kohlenwasserstoffrest mit 2 bis 20 Kohlenstoffatomen bedeutet.

Von den durch die obenstehende allgemeine Formel (I) beschriebenen Alkoxysilanverbindungen werden Trialkoxysilanverbindungen bevorzugt, in denen B in der allgemeinen Formel (I) -S₄- bedeutet.
(1) Bis(3-trimethoxysilylpropyl)tetrasulfan
   (H₃CO)₃Si-(CH₂)₃-S₄-(CH₂)₃-Si-(OCH₃)₃
(2) Bis(3-triethoxysilylpropyl)tetrasulfan
   (H₅C₂O)₃Si-(CH₂)₃-S₄-(CH₂)₃-Si-(OC₂H₅)₃
(3) Bis(3-tripropoxysilylpropyl)tetrasulfan
   (H₇C₃O)₃Si-(CH₂)₃-S₄-(CH₂)₃-Si-(OC₃H₇)₃

Von den obengenannten Verbindungen wird vor allem das obengenannte Bis(3-trimethoxysilylpropyl)tetrasulfan (2) bevorzugt.

Von den durch die obenstehende allgemeine Formel (II) beschriebenen Alkoxysilanverbindungen wird vorzugsweise die nachstehend aufgeführte Alkoxysilanverbindung verwendet.
(4) (C₂H₅O)₃Si-CH₂CH₂C=CH₂
   3-Buten-triethoxysilan

Unter Verwendung einer durch eine der obenstehenden allgemeinen Formeln (I) und (II) beschriebenen Alkoxysilanverbindung können Vulkanisate mit ausgezeichneten dynamischen Eigenschaften hergestellt werden.

In dieser Erfindung wird die Alkoxysilanverbindung in einer Menge eingesetzt, die gewährleistet, daß 0,1·10⁻⁶ mol bis 13,5·10⁻⁶, vorzugsweise 0,3·10⁻⁶ bis 10,5·10⁻⁶ mol, Alkoxysilylgruppen je Quadratmeter spezifischer Oberfläche der amorphen Kieselsäure vorhanden sind. Ist die Menge der Alkoxysilylgruppen niedriger als 0,1·10⁻⁶ mol je Quadratmeter Oberfläche, wird die Kieselsäureoberfläche nicht in ausreichendem Maß modifiziert, was zu einer geringeren Anzahl Füllstoff-Kautschuk-Bindungen führt und zu unzureichenden Auswirkungen auf die dynamischen Eigenschaften. Ist die Menge der Alkoxysilylgruppen größer als 13,5·10⁻⁶ mol je Quadratmeter spezifischer Oberfläche, so ist ein Silanüberschuß im Verhältnis zur reaktiven Kieselsäureoberfläche vorhanden, und dieser hat nur einen geringen Einfluß auf weitere Verbesserungen der dynamischen Mischungseigenschaften.

Durch Verwendung der Alkoxysilanverbindung in den oben aufgeführten Mengenverhältnissen können Kautschukmischungen mit ausgezeichneter Hitze- und Ermüdungsbeständigkeit und ausgezeichneten dynamischen Eigenschaften erhalten werden.

### Amorphe Kieselsäure

Die amorphe Kieselsäure gemäß dieser Erfindung ist eine Kieselsäure oder ein Silikat mit einer spezifischen Oberfläche zwischen 50 und 100 m/g (BET-Adsorption: ISO 5794/1, Annex D). In dieser Erfindung kann die Kieselsäure bzw. das Silikat entweder allein oder eine Kombination der beiden eingesetzt werden. In dieser Erfindung wird die Kieselsäure oder das Silikat für gewöhnlich in einer Gesamtmenge von 5 bis 90 GT, vorzugsweise von 20 bis 80 GT, bezogen auf 100 GT des Kautschukanteils, eingesetzt.

Werden die erfindungsgemäßen Kautschukmischungen für Schwingungsdämpfer verwendet, so müssen sie bestimmte dynamische Eigenschaften besitzen, die je nach Einsatz des schwingungsdämpfenden Gummiartikels den Dämpfungseffekt bestimmen. Die Anteile der obengenannten Alkoxysilanverbindung und der amorphen Kieselsäure in der Mischung werden daher entsprechend der Anwendung jeweils aufeinander abgestimmt.

### Andere Mischungsbestandteile

Entsprechend dieser Erfindung können Zusatzstoffe wie z.B. andere anorganische Füllstoffe als die obengenannten Kieselsäure und Silikate in die Kautschukmischung eingearbeitet werden, solange die eingesetzten Mengen den Zweck dieser Erfindung nicht beeinträchtigen.

Andere anorganische Füllstoffe als die obengenannte amorphe Kieselsäure sind z.B. Ruße wie SRF, GPF, FEF, HAF, ISAF, SAF, FT und MT mit einer spez. Oberfläche zwischen 5 und 90 m/g, natürlich vorkommende Kieselsäuren, Kalziumkarbonate, Talkum und Kaoline, mit einer spez. Oberfläche zwischen 1 und 30 m/g in einer Menge zwischen 0,1 bis 60, bzw. 0,1 bis 100 GT.

In den erfindungsgemäßen Kautschukmischungen beträgt die Gesamtmenge der anorganischen Füllstoffkomponenten für gewöhnlich 10 bis 120 GT bezogen auf 100 GT des Kautschukanteils. Bei einem zu hohen Gesamtanteil der anorganischen Füllstoffkomponenten werden jedoch ausgezeichnete dynamische Eigenschaften und Ermüdungsbeständigkeit der Kautschukmischungen und Vulkanisate nicht erzielt.

### Herstellung der Vulkanisate

Die Fertigung von Vulkanisaten aus den erfindungsgemäßen Kautschukmischungen erfordert lediglich die Herstellung von Rohkautschukmischungen nach der unten beschriebenen Methode, anschließendes Formen der Rohmischungen je nach den Erfordernissen und darauffolgende Vulkanisation in der gleichen Weise wie bei herkömmlichen Kautschukmischungen.

Für die Herstellung von Vulkanisaten gemäß dieser Erfindung werden - zusätzlich zu der obengenannten Kautschukkomponente, der Alkoxysilanverbindung und der amorphen Kieselsäure und entsprechend der beabsichtigten Anwendung der Vulkanisate und der an sie gestellten Anforderungen - die Art und Menge der Weichmacher, die Art und Menge der Verbindungen, die ein Vulkanisationssystem darstellen, wie z.B. Vulkanisationsmittel, Vulkanisationsbeschleuniger und sonstige Vulkanisationshilfsmittel, sowie die Verfahren zur Herstellung der Vulkanisate sorgfältig ausgewählt. Als die obenerwähnten Weichmacher können üblicherweise in Kautschuk verwendete Weichmacher eingesetzt werden. Typischerweise werden verwendet: Weichmacher auf Erdölbasis wie z.B. Prozeßöle, Schmieröle, Paraffine, flüssiges Paraffin, Erdölasphalt und Vaseline; Weichmacher auf Steinkohlenteerbasis wie z.B. Steinkohlenteer und Steinkohlenteerpech; Weichmacher auf Fettölbasis wie z.B. Rizinusöl, Leinsamenöl, Rapsöl, Kokosnußöl und Tallöl oder deren Verschnitte in einer Menge zwischen 0 und 60 GT, vorzugsweise zwischen 2 und 40 GT, bezogen auf 100 GT Kautschuk sowie Wachse wie z.B. Bienenwachs, Karnaubawachs und Lanolin;
Fettsäuren und deren Salze wie z.B. Ricinolsäure, Palmitinsäure, Bariumstearat, Kalziumstearat und Zinklaurat,
und synthetische Hochpolymere wie z.B. Petroleumharz, ataktisches Polypropylen und Kumaronharz. Von diesen werden vorzugsweise Weichmacher auf Erdölbasis eingesetzt, insbesondere Prozeßöle.

Als Vulkanisationsmittel zur Herstellung der Vulkanisate gemäß dieser Erfindung werden Schwefelverbindungen verwendet wie nachstehend aufgeführt. Zu diesen Schwefelverbindungen zählen z.B. Schwefel, Schwefelchlorid, Schwefeldichlorid, Morpholindisulfid, Alkylphenoldisulfid, Tetramethylthiuramdisulfid und Selendimethyldithiocarbamat. Von diesen wird vorzugsweise Schwefel eingesetzt. Die obengenannten Schwefelverbindungen werden in Mengen zwischen 0,1 und 4 GT verwendet, vorzugsweise zwischen 0,5 und 3 GT, bezogen auf 100 GT des nichtkonjugierten Ethylen-Propylen-Dien-Kautschuks. Wird bei der Herstellung von Vulkanisaten gemäß dieser Erfindung als Vulkanisationsmittel eine Schwefelverbindung eingesetzt, so ist vorzugsweise zusätzlich ein Vulkanisationsbeschleuniger zu verwenden. Zu den verwendeten Vulkanisationsbeschleunigern gehören z.B. Thiazolverbindungen wie z. B. N-Cyclohexyl-2-Benzthiazolsulfenamid, N-Oxydiethylen-2-Benzthiazolsulfenamid, N, N-Diisopropyl-2-Benzthiazolsulfenamid, 2-Mercaptobenzthiazol, 2-(2,4-Dinitrophenyl)mercaptobenzthiazol, 2-(2,6-Diethyl-4-Morpholinthio)benzthiazol und Dibenzthiazyldisulfid;
Guanidinverbindungen wie z.B. Diphenylguanidin, Triphenylguanidin, Diorthotolylguanidin, Orthotolylbiguanidin und Diphenylguanidinphthalat; Aminaldehyd- oder Ammoniumaldehydverbindungen wie z.B. Anilin-Acetaldehyd-Reaktionsprodukte, Anilin-Butylaldehydkondensate, Hexamethylentetramin und Ammonium-Acetaldehyd-Reaktionsprodukte;
Imidazolinverbindungen wie z.B. 2-Mercapto-lmidazolin;
Thioharnstoffverbindungen wie z.B. Thiocarbanilide, Diethylthiohamstoff, Dibutylthioharnstoff, Trimethylthioharnstoff und Diorthotolylthioharnstoff; Thiuramverbindungen wie z.B. Tetramethylthiuram-Monosulfid, Tetramethylthiuram-Disulfid,
Tetraethylthiuram-Disulfid, Tetrabutylthiuram-Disulfid, Pentamethylen-Thiuram-Tetrasulfid; Dithioatverbindungen wie z.B. Zink-Dimethyldithiocarbamat, Zink-Diethyldithiocarbamat, Zink-Di-n-Butyldithiocarbamat, Zink-Ethylphenyldithiocarbamat, Zink-Butylphenyl-Dithiocarbamat, Natrium-Dimethyldithiocarbamat, Selen-Dimethyldithiocarbamat und Tellur-Dimethyldithiocarbamat;
Xanthatverbindungen wie z.B. Zink-Dibutylxanthat; und Verbindungen wie z.B. Zinkweiß. Die genannten Vulkanisationsbeschleuniger werden einer Menge zwischen 1 und 20 GT, vorzugsweise zwischen 0,5 und 10 GT, bezogen auf 100 GT des nichtkonjugierten Ethylen-Propylen-Dien-Kautschuks, eingesetzt.

Alkoxysilane und Kieselsäure oder Silikate werden vorzugsweise vor dem Einmischen in die beanspruchten Kautschukmischungen miteinander gemischt oder zur Reaktion gebracht, wie in dem U.S.-Patent US PS 4,076,550 und dem deutschen Patent P 4 004 781 beschrieben.

Es ist nicht unbedingt erforderlich, die gesamte verwendete Kieselsäure- oder Silikatmenge vorab mit Alkoxysilanen modifizieren. Es ist auch möglich, nur einen Teil vorab zu modifizieren und den Rest ohne vorherige Modifizierung einzusetzen. Die eingesetzten Ruße können vorab gemischt oder chemisch mit Organosilanverbindungen modifiziert werden; ihre Herstellung ist in der deutschen Patentanmeldung 4 023 537 beschrieben. Die Rohkautschukmischung wird gemäß nachstehend beschriebener Methode hergestellt. Die obengenannten Kautschukkomponenten, die Alkoxysilanverbindung und die amorphe Kieselsäure sowie ein Weichmacher werden einem Knetgerät, z.B. einem Banbury-Innenmischer, bei einer Temperatur von 150 °C 3 bis 10 Minuten lang geknetet, dann ein Vulkanisationsmittel und, falls erforderlich, ein Vulkanisationsbeschleuniger oder ein sonstiges Vulkanisationshilfsmittel hinzugefügt und entweder im Banbury-Innenmischer oder auf einer Mischwalze bei einer Walzentemperatur von 40 bis 60 °C weitere 5 bis 30 Minuten gemischt und die fertige Kautschukmischung anschließend als Kautschukfell oder in Form von Streifen ausgezogen.

Die so hergestellten Kautschukmischungen werden mit Hilfe von Extrudern, Kalandern oder Pressen in die gewünschte Form gebracht und 1 bis 150 Minuten bei einer Temperatur von 100 bis 270 °C unter gleichzeitiger Formgebung vulkanisiert oder nach der Formgebung zur Vulkanisation in ein Vulkanisationsgerät überführt. Für die Vulkanisation kann eine Vulkanisationsform verwendet werden oder auch nicht. Wird keine Vulkanisationsform verwendet, erfolgen Formgebung und Vulkanisation für gewöhnlich als kontinuierliche Prozesse.

### Auswirkung der Erfindung

Die Kautschukmischungen gemäß dieser Erfindung bestehen u.a. aus einem nichtkonjugierten Ethylen-Propylen-Dien-Kautschuk, einer Alkoxysilanverbindung sowie einer amorphen Kieselsäure und besitzen nicht nur ausgezeichnete dynamische Eigenschaften, sondern auch ausgezeichnete mechanische Eigenschaften sowie dynamische Ermüdungs- und Hitzealterungsbeständigkeit und erlauben überdies die Herstellung von Vulkanisaten mit ebensolchen Eigenschaften. Da die aus den erfindungsgemäßen Kautschukmischungen hergestellten Vulkanisate ausgezeichnete obengenannte Eigenschaften besitzen, lassen sie sich vielfältig einsetzen in Anwendungsgebieten wie Reifen, Autoteilen, allgemeinen Industriebauteilen, Materialien für den Bau- und Ingenieursektor, u.ä. Insbesondere eignen sie sich für die Verwendung in Artikeln, die über dynamische Ermüdungsbeständigkeit verfügen müssen, z.B. Reifenlaufflächen, Reifenseitenwänden, Scheibenwischblättern, Motorlagern, etc. Im folgenden wird diese Erfindung anhand von praktischen Beispielen erläutert, wobei zu beachten ist, daß sich diese Erfindung keineswegs auf diese Beispiele beschränkt.

Folgende Prüfmethoden wurden zur Auswertung der vulkanisierten Kautschukplatten in den Beispielen und Vergleichsbeispielen herangezogen:
(1) Zugfestigkeitsprüfung
   Aus einer vulkanisierten Kautschukplatte wurden hantelförmige Prüfkörper vom Typ Nr. 3 ausgestanzt wie in JIS K 6301 (1989) beschrieben und an den so erhaltenen Prüfkörpern entsprechend der in obigem JIS K 6301, Punkt 3, beschriebenen Methode bei einer Temperatur von 25 °C und einer Zuggeschwindigkeit von 500 mm/min eine Zugfestigkeitsprüfung durchgeführt und der Spannungswert 25 % (M₂₅), Spannungswert 50 % (M₅₀), Spannungswert 100 % (M₁₀₀), Spannungswert 200 % (M₂₀₀) Spannungswert 300 % (M₃₀₀), die Zugfestigkeit T_{B} (kgf/sm) und die Bruchdehnung E_{B} (%) ermittelt wurden.
(2) Härte-Prüfung
   Bei der Härte-Prüfung wurde die Federhärte Hₛ (JIS A-Härte) gemäß JIS K 6301 (1989) ermittelt.
(3) Zugermüdungsprüfung (Monsanto-Ermüdungsprüfung)
   Aus einer vulkanisierten Kautschukplatte wurden hantelförmige Prüfkörper vom Typ Nr. 3 ausgestanzt wie in JIS K 6301 (1989) beschrieben, 20 der so erhaltenen Prüfkörper einer Zugermüdungsprüfung unterworfen bei einem Dehnungsverhältnis von 200 %, einer Prüftemperatur von 25 °C und einer Dehnungsfrequenz von 300 Dehnungen pro Minute und die mittlere Anzahl der Versuchsdurchführungen bis zum Bruch des Prüfkörpers als Index für die dynamischen Ermüdungsbeständigkeit (Haltbarkeit) herangezogen.
(4) Hitzealterungsprüfung
   Für die Hitzealterungsprüfung wurde eine vulkanisierte Kautschukplatte einer Hitzealterung gemäß JIS K 6301 (1989) unterworfen und die Zugfestigkeit, Dehnung und Zugspannung der Platte nach Alterung gemessen, wobei die Hitzealterungsbeständigkeit der Platte als Retention (%) der Eigenschaften, bezogen auf die ursprünglichen Eigenschaften der ungealterten Platte, angegeben wurden.
(5) Bestimmung der bleibenden Dehnungsverformung (PSM)
   Die bleibende Dehnungsverformung wurde an einem gemäß JIS K 6301 hergestellten hantelförmigen Prüfkörper von Typ Nr. 1 ermittelt, indem der erhaltene Prüfkörper zunächst bis zu einem Verhältnis von 200 % gedehnt wurde, diese Dehnung 10 Minuten lang gehalten und dann nachgelassen wurde und nach weiteren 10 Minuten die bleibende Dehnungsverformung des Prüfkörpers gemessen wurde.
(6) Bestimmung der dynamischen Eigenschaften (tan δ)
   Die dynamischen Eigenschaften wurden gemäß JIS K 6394 unter Verwendung eines Viskoelastizitäts-Prüfgerätes der Firma Rheometrics Co. Ltd. (Typ: RDS-2) bei einer Prüftemperatur von 25 °C und 80 °C, einer Frequenz von 10 Hz und einem Verformungsfaktor von 1 % ermittelt und als Maß tan δ erhalten.
(7) Bestimmung der bleibenden Druckverformung
   Die bleibende Druckverformung der vulkanisierten Platte wurde nach JIS K 6301 (1989) ermittelt und als deren Maß ein Verformungsfaktor (%) erhalten.

Die folgenden Ethylen-Propylen-5-Ethyliden-2-Norbornen-Copolymere, folgende Alkoxysilanverbindung und folgende amorphe Kieselsäuren wurden in den Beispielen und Vergleichsbeispielen verwendet.
(1) Ethylen-Propylen-5-Ethyliden-2-Norbornen-Copolymere (Tabelle 1)

| | EPT-1 | EPT-2 | EPT-3 |
|---|---|---|---|
| Ethylengehalt (mol%) | 70 | 71 | 70 |
| Jodzahl (ENB) | 18 | 20 | 19 |
| MS₁₊₄ (160°C) | 70 | 20 | 45 |

(2) Alkoxysilanverbindung (Verstärkungsadditiv)
(H₅C₂O)₃Si-(CH₂)₃-S₄-(CH₂)₃-Si-(OC₂H₅)₃
Si 69, hergestellt von Degussa AG
(3) Amorphe Kieselsäuren (Tabelle 2)

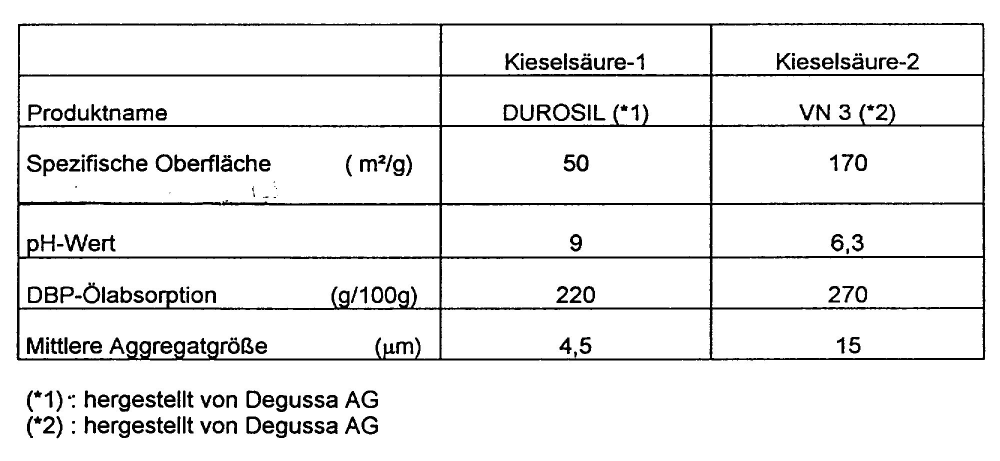

### (Vergleichsbeispiel 1)

100 GT EPT-1 wie in Tabelle 1 gezeigt, 60 GT Paraffinöl ("Sansen 4240" hergestellt von Sanshin Kagaku K.K.), 5 GT Zinkweiß Nr. 1, 1 GT Stearinsäure und 60 GT FEF-Ruß ("Asahi 60 HG" hergestellt von Asahi Carbon K.K.) wurden in einem 4,3 l Banbury-Innenmischer (hergestellt von Kobe Selkosho K.K.) geknetet.

Nach Abkühlung dieser Grundmischung auf eine Temperatur von ca. 50 °C wurden ihr 1,5 GT Schwefel, 1,0 GT "Nocceler M" (MBT hergestellt von Ouchi Shinko Kagaku Kogyo K.K., Vulkanisationsbeschleuniger), 0,8 GT "Nocceler TRA" (DPTT hergestellt von Ouchi Shinko Kagaku Kogyo K.K., Vulkanisationsbeschleuniger), 1,5 GT "Nocceler BZ" (ZDBC hergestellt von Ouchi Shinko Kagaku Kogyo K.K., Vulkanisationsbeschleuniger) und 0,8 GT "Nocceler TT" (TMTD hergestellt von Ouchi Shinko Kagaku Kogyo K.K., Vulkanisationsbeschleuniger) hinzugefügt und erneut auf einer 8 Inch-Walze (Temperatur der vorderen und hinteren Walze: 55 °C) gemischt, dann ein Fell von der nötigen Dicke ausgezogen, welches 20 Minuten lang bei einer Temperatur von 150 °C gepreßt wurde, um so eine 2 mm dicke vulkanisierte Platte zu erhalten. Die physikalischen Eigenschaften der so erhaltenen vulkanisierten Platte wurden entsprechend den oben aufgeführten Methoden bestimmt. Darüberhinaus wurde eine weitere Platte wie oben beschrieben bei einer Temperatur von 150 °C 22 Minuten lang gepreßt und so ein dicker vulkanisierter Kautschukformkörper erhalten, an dem die bleibende Druckverformung ermittelt wurde.

Die Ergebnisse sind in Tabelle 3 aufgeführt:

### (Beispiel 1)

Es wurden die Vorgehensweisen für das Vergleichsbeispiel 1 befolgt mit der Ausnahme, daß die Menge des verschnittenen FEF-Rußes aus dem Vergleichsbeispiel 1 auf 40 GT reduziert wurde und daß die in Tabelle 2 aufgeführte Kieselsäure-1 und die obenaufgeführte Alkoxysilanverbindung jeweils in einer Menge von 20 GT bzw. 1 Gewichtsteil eingesetzt wurden, um eine vulkanisierte Platte zu erhalten. Die physikalischen Eigenschaften der so erhaltenen vulkanisierten Platte wurden bestimmt. Die Ergebnisse sind in Tabelle 3 aufgeführt.

### (Beispiel 2)

Es wurden die Vorgehensweisen für das Vergleichsbeispiel 1 befolgt mit der Ausnahme, daß die Menge des verschnittenen FEF-Rußes aus dem Vergleichsbeispiel 1 auf 20 GT reduziert wurde und daß die in Tabelle 2 aufgeführte Kieselsäure-1 und die obenaufgeführte Alkoxysilanverbindung jeweils in einer Menge von 40 bzw. 2 GT eingesetzt wurden, um eine vulkanisierte Platte zu erhalten. Die physikalischen Eigenschaften der so erhaltenen vulkanisierten Platte wurden bestimmt.

Die Ergebnisse sind in Tabelle 3 aufgeführt.

### (Beispiel 3)

Es wurden die Vorgehensweisen für das Vergleichsbeispiel 1 befolgt mit der Ausnahme, daß die Menge des verschnittenen FEF-Rußes aus dem Vergleichsbeispiel 1 auf 0 GT reduziert wurde und daß die in Tabelle 2 aufgeführte Kieselsäure-1 und die obenaufgeführte Alkoxysilanverbindung jeweils in einer Menge von 60 bzw. 3 GT eingesetzt wurden, um eine vulkanisierte Platte zu erhalten. Die physikalischen Eigenschaften der so erhaltenen vulkanisierten Platte wurden bestimmt.

Die Ergebnisse sind in Tabelle 3 aufgeführt.

### (Beispiel 4)

Es wurden die Vorgehensweisen für das Beispiel 3 befolgt mit der Ausnahme, daß der in Tabelle 1 aufgeführte Kautschuk EPT-3 anstelle von EPT-1 verwendet wurde, um eine vulkanisierte Platte zu erhalten. Die physikalischen Eigenschaften der so erhaltenen vulkanisierten Platte wurden bestimmt.

Die Ergebnisse sind in Tabelle 3 aufgeführt.

### (Vergleichsbeispiel 2)

Es wurden die Vorgehensweisen für das Vergleichsbeispiel 1 befolgt mit der Ausnahme, daß die Menge des verschnittenen FEF-Rußes aus dem Vergleichsbeispiel 1 auf 40 GT reduziert wurde und daß die in Tabelle 2 aufgeführte Kieselsäure-2 und die obenaufgeführte Alkoxysilanverbindung jeweils in einer Menge von 20 bzw. 3 GT eingesetzt wurden, um eine vulkanisierte Platte zu erhalten. Die physikalischen Eigenschaften der so erhaltenen vulkanisierten Platte wurden bestimmt.

Die Ergebnisse sind in Tabelle 3 aufgeführt.

### (Vergleichsbeispiel 3)

Es wurden die Vorgehensweisen für das Vergleichsbeispiel 1 befolgt mit der Ausnahme, daß die Menge des verschnittenen FEF-Rußes aus dem Vergleichsbeispiel 1 auf 20 GT reduziert wurde und daß die in Tabelle 2 aufgeführte Kieselsäure-2 und die obenaufgeführte Alkoxysilanverbindung jeweils in einer Menge von 40 bzw. 6 GT eingesetzt wurden, um eine vulkanisierte Platte zu erhalten. Die physikalischen Eigenschaften der so erhaltenen vulkanisierten Platte wurden bestimmt.

Die Ergebnisse sind in Tabelle 3 aufgeführt.

### (Vergleichsbeispiel 4)

Es wurden die Vorgehensweisen für das Vergleichsbeispiel 1 befolgt mit der Ausnahme, daß die Menge des verschnittenen FEF-Rußes aus dem Vergleichsbeispiel 1 auf 0 GT reduziert wurde und daß die in Tabelle 2 aufgeführte Kieselsäure-2 und die obenaufgeführte Alkoxysilanverbindung jeweils in einer Menge von 60 bzw. 9 GT eingesetzt wurden, um eine vulkanisierte Platte zu erhalten. Die physikalischen Eigenschaften der so erhaltenen vulkanisierten Platte wurden bestimmt.

Die Ergebnisse sind in Tabelle 3 aufgeführt.

### (Vergleichsbeispiel 5)

Es wurden die Vorgehensweisen für das Vergleichsbeispiel 1 befolgt mit der Ausnahme, daß der in Tabelle 1 aufgeführte Kautschuk EPT-2 anstelle von EPT-1 verwendet und die Menge des verschnittenen FEF-Rußes aus dem Vergleichsbeispiel 1 auf 0 GT reduziert wurde sowie die in Tabelle 2 aufgeführte Kieselsäure-1 und die obenaufgeführte Alkoxysilanverbindung jeweils in einer Menge von 60 bzw. 3 GT eingesetzt wurden, um eine vulkanisierte Platte zu erhalten. Die physikalischen Eigenschaften der so erhaltenen vulkanisierten Platte wurden bestimmt.

Die Ergebnisse sind in Tabelle 3 aufgeführt.

### (Vergleichsbeispiel 6)

100 GT Naturkautschuk (RSS Nr. 1), 20 GT Paraffinöl ("Sansen 4240" hergestellt von Sanshin Kagaku K.K.), 5 GT Zinkweiß Nr. 1, 1 GT Stearinsäure und 40 GT HAF-Ruß ("Asahi Nr. 70" hergestellt von Asahi Carbon K.K.) wurden in einem 4,3 l Banbury-Innenmischer (hergestellt von Kobe Selkosho K.K.) geknetet.

Nach Abkühlung dieser Grundmischung auf eine Temperatur von ca. 50 °C wurden ihr 1,5 GT Schwefel und 1,0 GT "Nocceler CZ" (CBS hergestellt von Ouchi Shinko Kagaku Kogyo K.K., Vulkanisationsbeschleuniger) hinzugefügt und die so erhaltene Mischung auf einer 8 Inch-Walze (Temperatur der vorderen und hinteren Walze: 55 °C) gemischt, diese Mischung als Fell von der erforderlichen Dicke ausgezogen, welches 13 Minuten lang bei einer Temperatur von 150 °C gepreßt wurde, um so eine vulkanisierte Platte mit einer Dicke von 2 mm zu erhalten. Die physikalischen Eigenschaften der so erhaltenen vulkanisierten Platte wurden nach den oben aufgeführten Methoden bestimmt. Die Ergebnisse sind in Tabelle 3 aufgeführt.

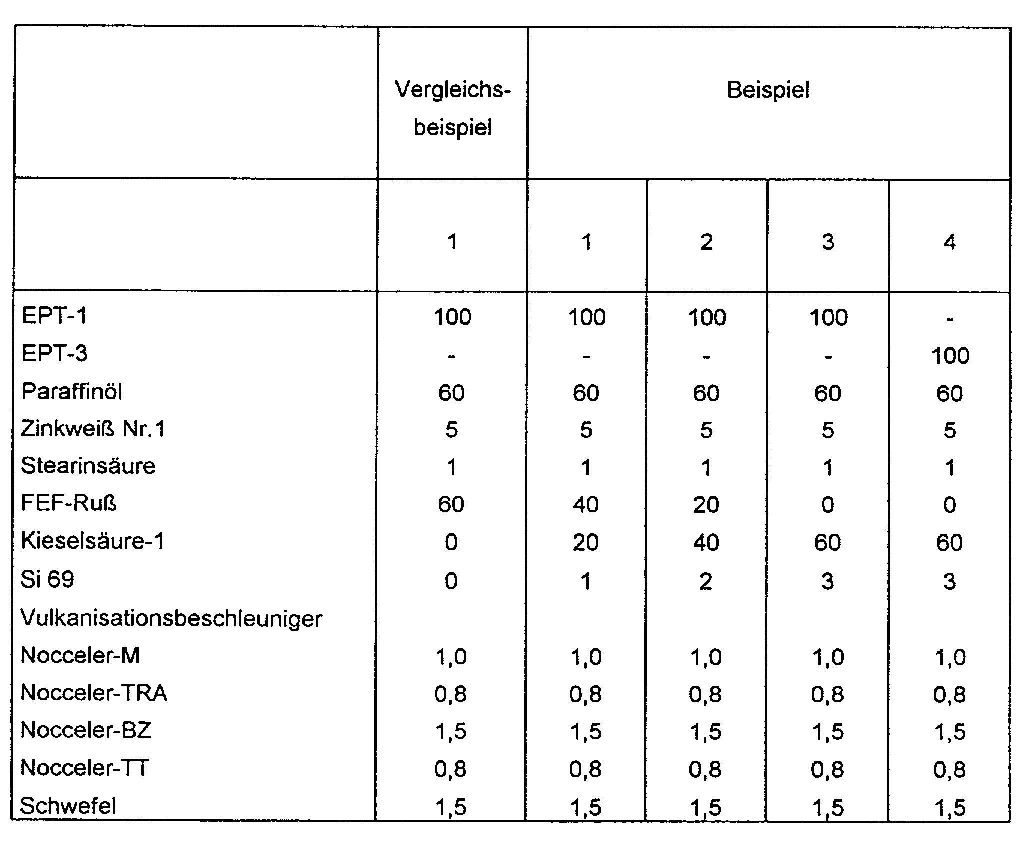

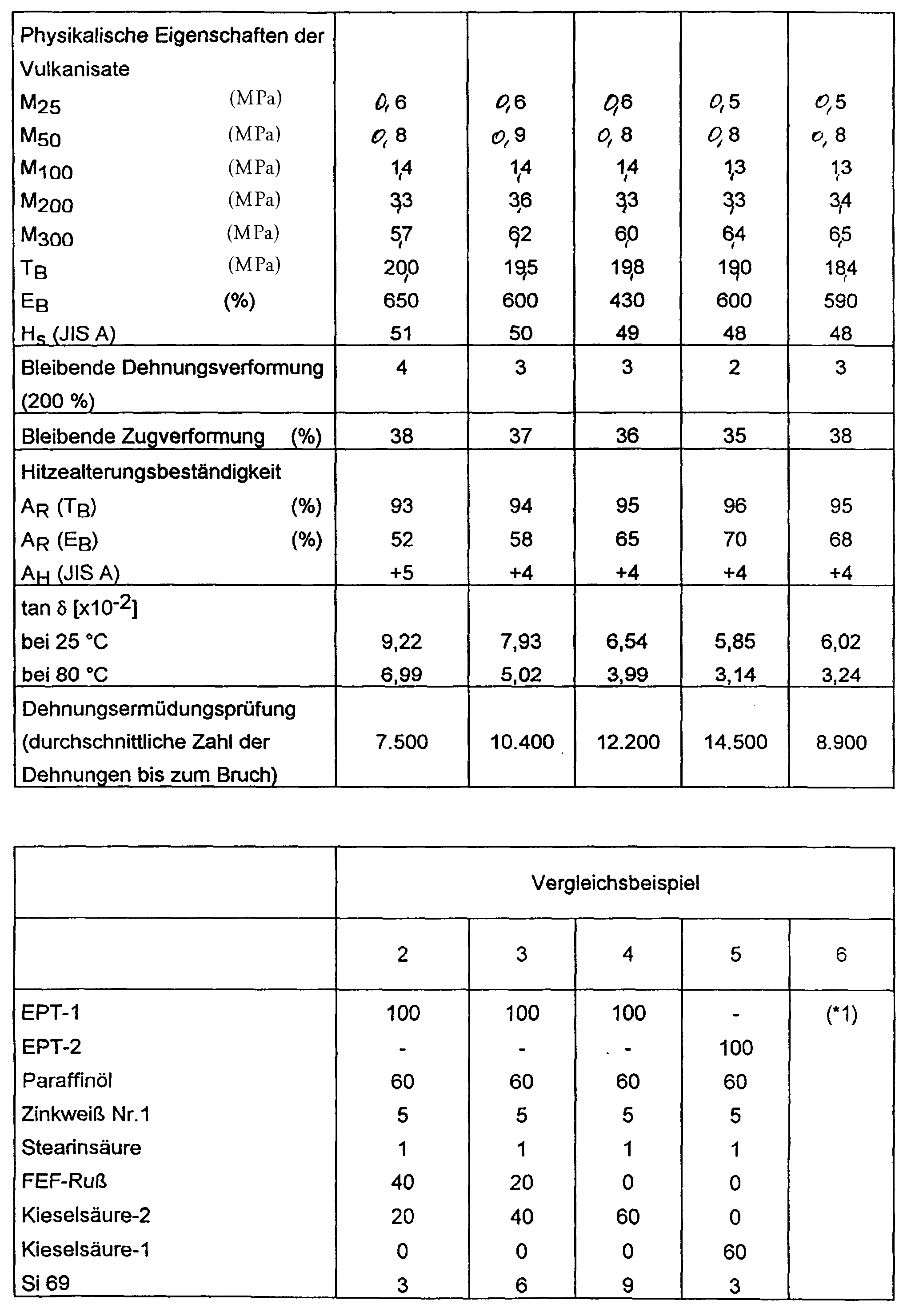

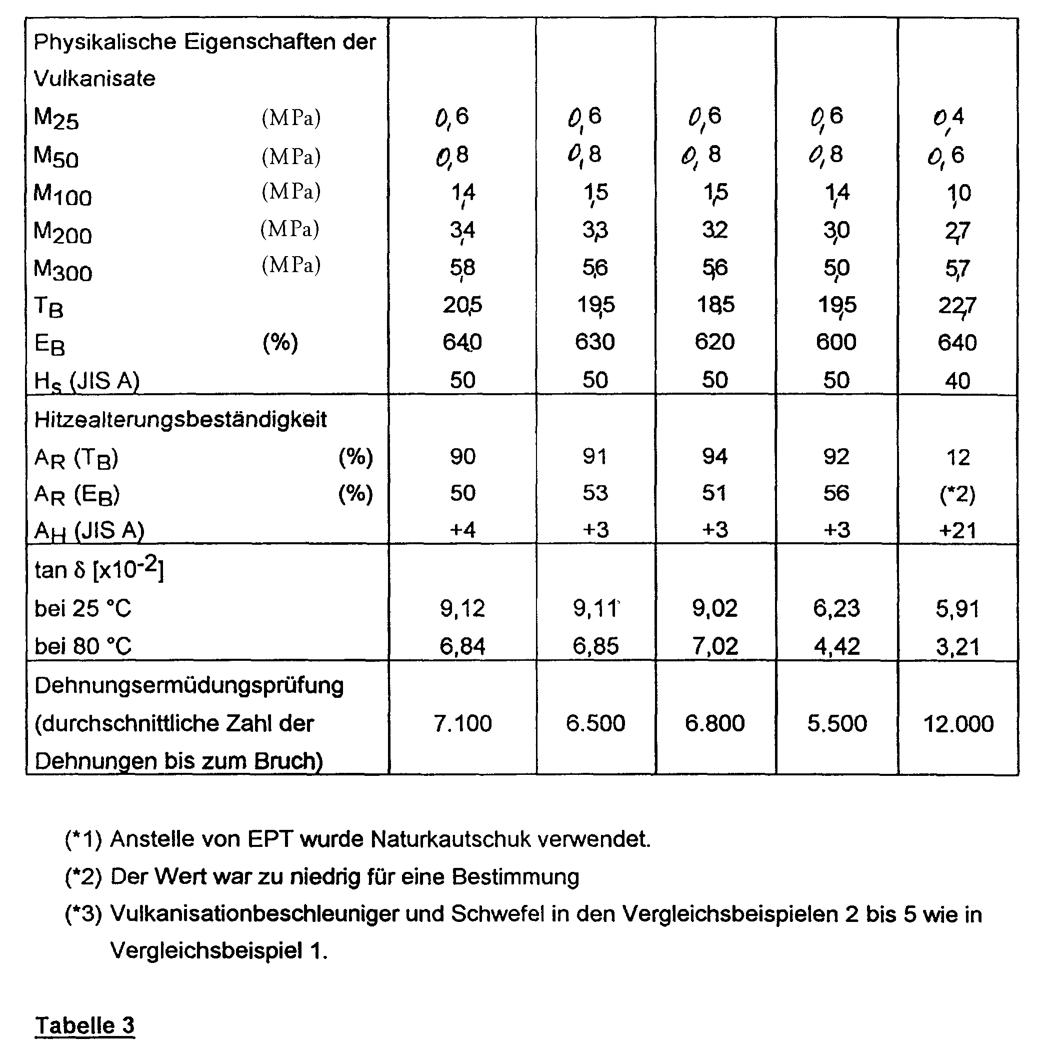

Wie aus dem Vergleich der Beispiele 1 bis 3 mit dem Vergleichsbeispiel 1 in der obenstehenden Tabelle 3 hervorgeht, kann durch Kombination der amorphen Kieselsäure mit der Alkoxysilanverbindung (Verstärkungsadditiv) gemäß dieser Erfindung der tan δ-Wert reduziert werden, d.h., die dynamischen Eigenschaften können verbessert werden. Obwohl die Verbesserung der dynamischen Eigenschaften (Reduzierung von tan δ) und die der Ermüdungsbeständigkeit für gewöhnlich in einander entgegengesetztem Verhältnis stehen, werden durch Erhöhung der Menge der mit einem Organosilan als Verstärkungsadditiv behandelten amorphen Kieselsäure sowohl die Ermüdungsbeständigkeit, als auch die dynamischen Eigenschaften verbessert.

Allerdings, wie aus dem Vergleich der Beispiele 1 bis 3 mit den Vergleichsbeispielen 2 bis 4 in Tabelle 3 hervorgeht, können selbst bei Einsatz von EPT-1 und Si 69 (Organosilan als Verstärkungsadditiv) wie in Beispiel 1 bis 3 die dynamischen Eigenschaften nicht verbessert werden, wenn die spezifische Oberfläche der amorphen Kieselsäure 100 m/g überschreitet.

Überdies, wie aus dem Vergleich der Beispiele 1 bis 3 mit den Vergleichsbeispielen 5 und 6 in obenstehender Tabelle 3 hervorgeht, sollte die Mooney-Viskosität MS₁₊₄ (160 °C) von EPT 40 oder mehr betragen, um eine Ermüdungsbeständigkeit zu erhalten, die der von Naturkautschuk, einem Dienkautschuk in Vergleichsbeispiel 6, entspricht.

Überdies, wie aus dem Vergleich von Beispiel 3 mit dem Vergleichsbeispiel 6 in obenstehender Tabelle 3 hervorgeht, weisen die Vulkanisate in Beispiel 3 eine bessere Hitzebeständigkeit auf als die Vulkanisate auf Naturkautschukbasis, dem Dienkautschuk in Vergleichsbeispiel 6, und besitzen ferner eine Ermüdungsbeständigkeit und dynamische Eigenschaften, die denen der Vulkanisate auf Naturkautschukbasis gleichwertig sind.

Weitere Beispiele belegen die durch Reduzierung des Füllstoff- und Weichmachergehaltes erhaltenen Verbesserungen der dynamischen Eigenschaften.

Es wurden folgende Standardprüfmethoden verwendet:

| | |
|---|---|
| (1) Spannungswert 100 % | gemäß DIN 53 504 |
| (2) Elastizität | gemäß DIN 53 512 |
| (3) Shore-A-Härte | gemäß DIN 53 505 |
| (4) Verlustfaktor tan δ | gemäß DIN 53 513 |
| (5) Komplexer dynamischer Modul | gemäß DIN 53 513 |

Die Mischungsbestandteile sind die folgenden:

| Ethylen-Propylen-Dien-Kautschuk (Buna) | | |
|---|---|---|
| | AP 341 | AP 451 |
| Ethylengehalt (%) | 50 | 50 |
| Diengehalt (%) | 4 | 8 |
| Jodzahl | 8 | 14 |
| Mooney-Viskosität (100°C) | 70 | 90 |

(gemäß DIN 53 523/53 524)

### Weitere Mischungsbestandteile:

- Ingraplast® NS: naphthenischer Weichmacher
- Vulkacit® Merkapto: 2-Merkapto-Benzthiazol
- Vulkacit® Thiuram: Tetramethylthiuramdisulfid
- Si 69: Bis(3-triethoxysilylpropyl)tetrasulfan
- CORAX® N 550: Furnaceruß, hergestellt von Degussa AG
- DUROSIL®: gefällte Kieselsäure, hergestellt von Degussa AG (BET-Oberfläche 50 m/g)

Die Rezepturen und Ergebnisse sind in den Tabellen zusammengefaßt:

| | Vergleichsbeispiele | | | |
|---|---|---|---|---|
| Rezeptur | A | B | C | D |
| Buna AP 341 | 100 | - | 100 | - |
| Buna AP 451 | - | 100 | - | 100 |
| Stearinsäure | 1 | 1 | 1 | 1 |
| Zinkoxyd RS | 5 | 5 | 5 | 5 |
| Ingraplast NS | 60 | 60 | 33 | 33 |
| CORAX N 550 | 60 | 60 | 5 | 5 |
| DUROSIL | - | - | 40 | 40 |
| Si 69 | - | - | 2 | 2 |
| Vulkacit Merkapto | 0,5 | 0,5 | 0,5 | 0,5 |
| Vulkacit Thiuram | 3 | 3 | 3 | 3 |
| Schwefel | 1,5 | 1,5 | 1,5 | 2 |

| Physikalische Eigenschaften der Vulkanisate | | | | |
|---|---|---|---|---|
| Vulkanisationstemperatur: 150°C | Vergleichsbeispiele | | | |
| | A | B | C | D |
| Spannungswert 100 % (MPa) | 2,6 | 2,8 | 2,9 | 3,5 |
| Elastizität (%) | 60 | 61 | 69 | 68 |
| Shore-A-Härte | 62 | 61 | 62 | 64 |

### Viskoelastische Eigenschaften

- Prüfgerät:: MTS 831
- Prüfkörper:: Zylinder 10x10 mm, vulkanisiert bei 150 °C bis t95%
- Vorlast:: 50 N
- Kraftamplitude:: ± 25 N
- Laufzeit:: 2 min

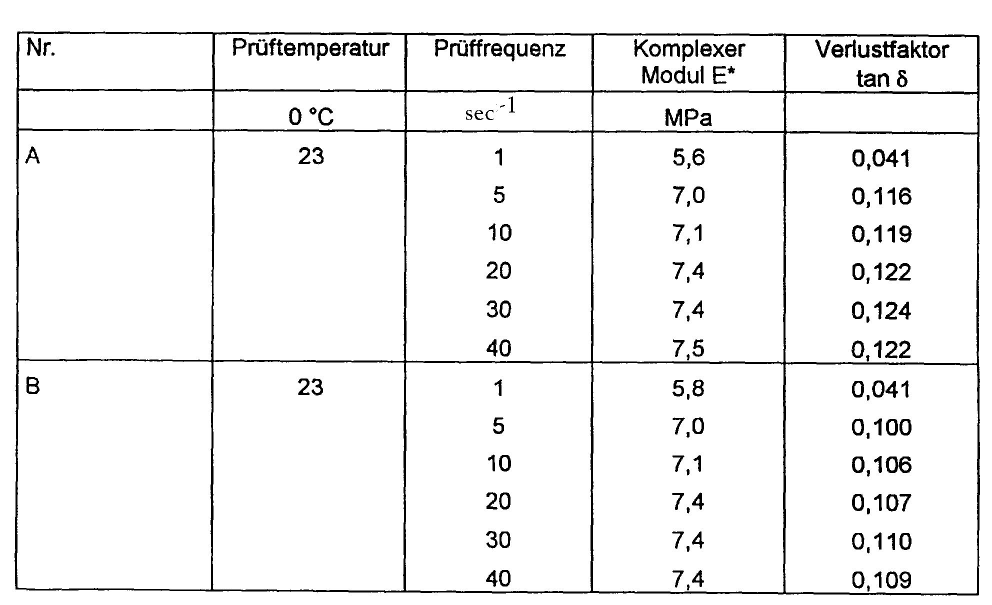

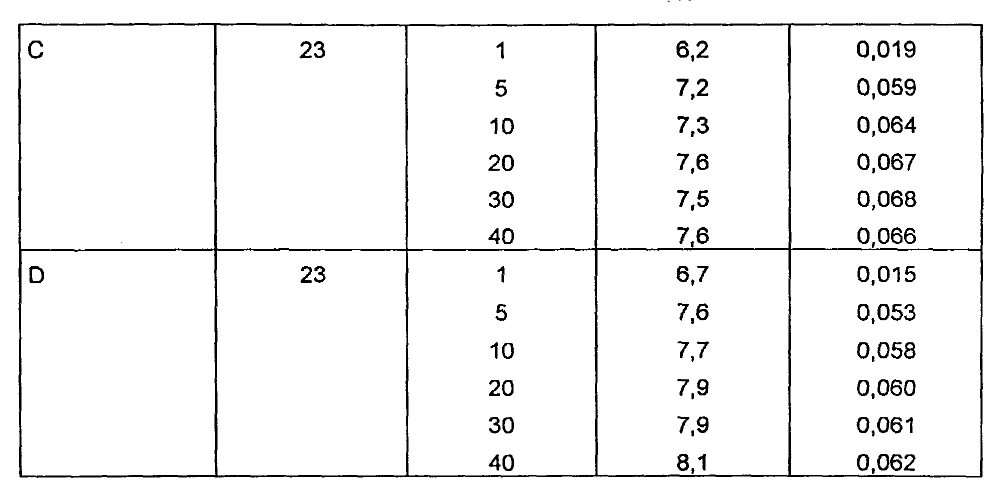

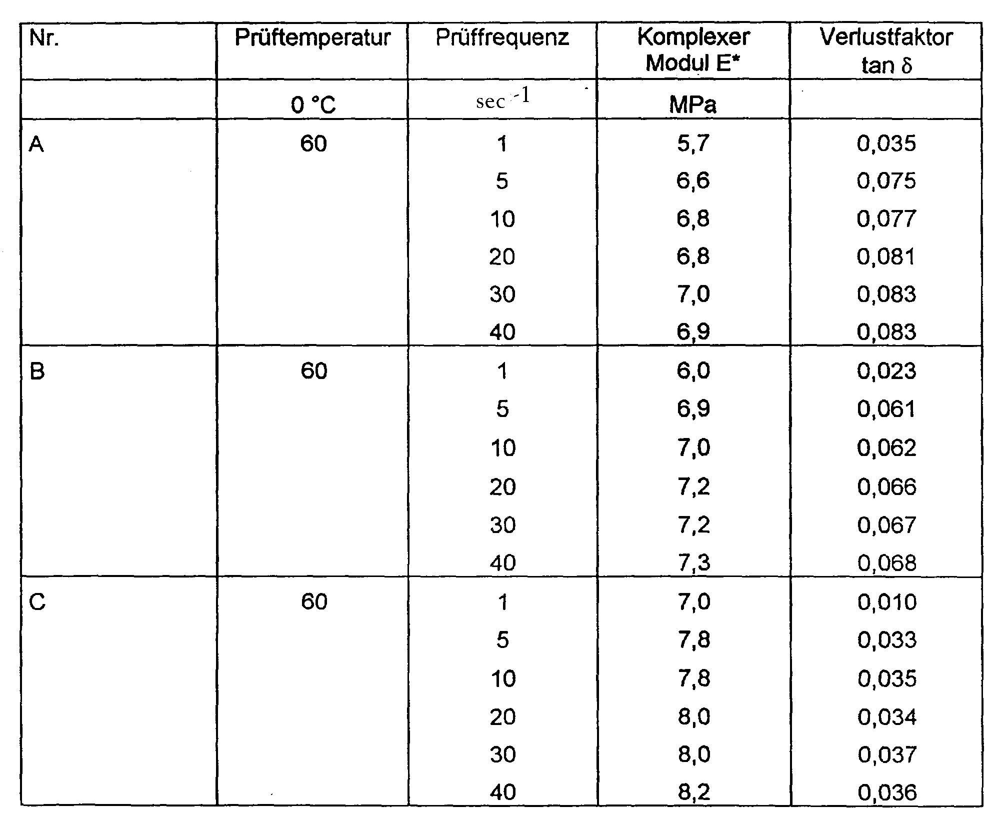

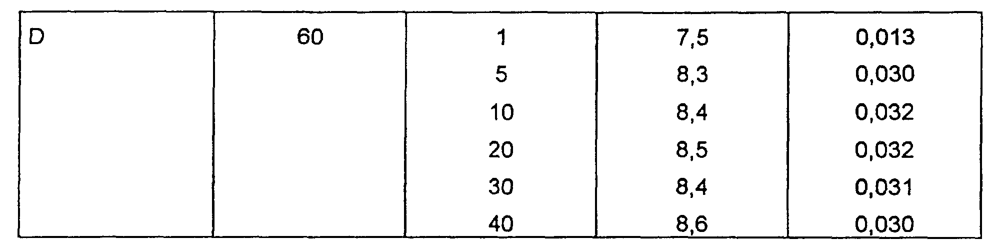

Der Vergleich der Beispiele A, B und C, D zeigt, das der Austausch des Rußes gegen Durosil in Kombination mit einem Silan zu einer drastischen Reduzierung von tan δ und gleichzeitig zu erhöhter Elastizität führt, während Spannungswert und Shore-Härte konstant bleiben.

## Patentansprüche (Patentansprüche für folgende(n) Vertragsstaat(en): AT, BE, DK, FR, GB, GR, IE, IT, NL, SE)

1. Vulkanisierbare EPDM-Kautschukmischungen enthaltend einen nichtkonjugierten Ethylen-Propylen-Dien-Kautschuk (EPDM), ein Schwefel oder Schwefelverbindungen enthaltendes Vernetzungssystem und wenigstens eine der Alkoxysilanverbindungen entsprechend der folgenden allgemeinen Formeln (I) oder (II) sowie eine Kieselsäure und/oder ein Silikat mit einer spezifischen Oberfläche von 50 bis 100 m/g (BET-Adsorption: ISO 5794/1, Annex D): 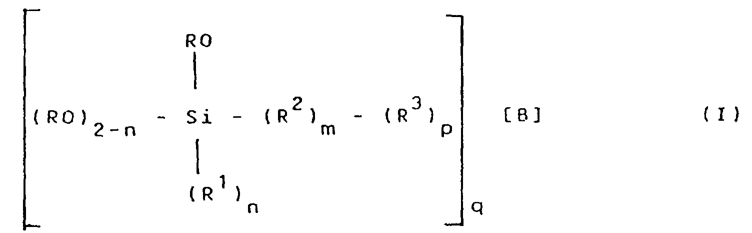 worin bedeuten R eine Alkylgruppe mit 1 bis 4 Kohlenstoffatomen oder eine Alkoxygruppe mit 1 bis 4 Kohlenstoffatomen, R¹ eine Alkylgruppe mit 1 bis 4 Kohlenstoffatomen oder eine Phenylgruppe, n 0, 1 oder 2, R einen zweiwertigen geraden oder verzweigten Kohlenwasserstoffrest mit 1 bis 6 Kohlenstoffatomen, R³ eine Arylengruppe mit 6 bis 12 Kohlenstoffatomen, m und p 0 oder 1 mit der Maßgabe, daß p und m nicht gleichzeitig 0 bedeuten, q 1 oder 2, B -SCN oder -SH, wenn q=1, und -Sₓ- (wobei x eine ganze Zahl zwischen 2 und 8 ist), wenn q=2 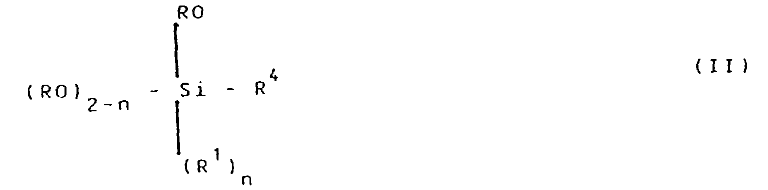 worin bedeuten R eine Alkylgruppe mit 1 bis 4 Kohlenstoffatomen oder eine Alkoxygruppe mit 1 bis 4 Kohlenstoffatomen, R¹ eine Alkylgruppe mit 1 bis 4 Kohlenstoffatomen oder eine Phenylgruppe, n 0,1 oder 2 und R⁴ eine einwertigen geraden oder verzweigten, ungesättigten Kohlenwasserstoffrest mit 2 bis 20 Kohlenstoffatomen, wobei die Alkoxysilane in einer Menge verwendet werden, die gewährleistet, daß 0,1·10⁻⁶ bis 13,5·10⁻⁶ mol Alkoxysilylgruppen je m spezifischer Oberfläche vorhanden sind, und die EPDM-Kautschuke eine Mooney-Viskosität, MS₁₊₄, 160 °C, zwischen 40 und 80 oder MS₁₊₄, 100 °C, zwischen 60 und 200 aufweisen.

2. Kautschukmischungen gemäß Anspruch 1,
dadurch gekennzeichnet, daß sie Kieselsäuren und/oder Silikate in einer Menge zwischen 5 und 90 GT, bezogen auf 100 GT Kautschuk, enthalten.

3. Kautschukmischungen gemäß Anspruch 1 und 2, dadurch gekennzeichnet, daß die Kieselsäure und/oder das Silikat vor dem Einmischen in die Kautschukmischung mit dem Alkoxysilan vermischt oder zur Reaktion gebracht werden.

4. Kautschukmischungen gemäß einem oder mehrerer der Ansprüche 1 bis 3, dadurch gekennzeichnet, daß sie zusätzlich Ruß mit einer spezifischen Oberfläche zwischen 5 und 90 m/g und/oder mineralische Füllstoffe mit einer spezifischen Oberfläche zwischen 1 und 30 m/g in einer Menge zwischen 0,1 bis 60 bzw. 0,1 bis 100 GT enthalten.

5. Kautschukmischungen gemäß einem oder mehrerer der Ansprüche 1 bis 4, dadurch gekennzeichnet, daß der verwendete EPDM-Kautschuk eine Jodzahl von 8 bis 30 besitzt.

6. Kautschukmischungen gemäß einem oder mehrerer der Ansprüche 1 bis 5, dadurch gekennzeichnet, daß der verwendete EPDM-Kautschuk ein Ethylen-Propylen-5-Ethyliden-2-Norbornen-Copolymer ist.

7. Kautschukmischungen gemäß einem oder mehrerer der Ansprüche 1 bis 6, dadurch gekennzeichnet, daß die Mischungen weitere kompatible Kautschuke oder Kunststoffe enthalten.

8. Verfahren zur Vulkanisation der Kautschukmischungen gemäß einem oder mehrerer der Ansprüche 1 bis 7, welches das Heizen der Mischungen bei einer Temperatur zwischen 100 und 270 °C für die Dauer von 1 bis 150 Minuten je nach Heiztemperatur beinhaltet.

## Patentansprüche (Patentansprüche für folgende(n) Vertragsstaat(en): ES)

1. Verfahren zur Herstellung von vulkanisierbaren EPDM-Kautschukmischungen enthaltend einen nichtkonjugierten Ethylen-Propylen-Dien-Kautschuk (EPDM), ein Schwefel oder Schwefelverbindungen enthaltendes Vernetzungssystem und die üblichen Kautschukhilfsmittel dadurch gekennzeichnet, daß man eine Kieselsäure und/oder ein Silikat mit einer spezifischen Oberfläche von 50 bis 100 m/g (BET-Adsorption: ISO 5794/1, Annex D) und wenigstens eine der Alkoxysilanverbindungen entsprechend den allgemeinen Formeln (I) oder (II): 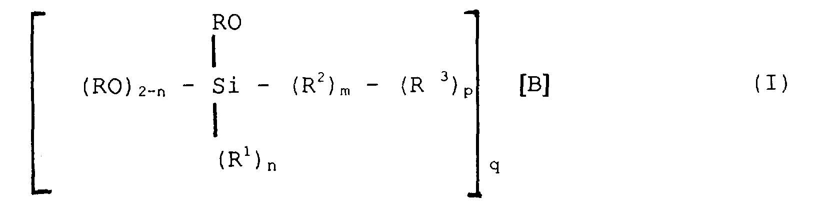 worin bedeuten R eine Alkylgruppe mit 1 bis 4 Kohlenstoffatomen oder eine Alkoxygruppe mit 1 bis 4 Kohlenstoffatomen, R¹ eine Alkylgruppe mit 1 bis 4 Kohlenstoffatomen oder eine Phenylgruppe, n 0, 1 oder 2, R einen zweiwertigen geraden oder verzweigten Kohlenwasserstoffrest mit 1 bis 6 Kohlenstoffatomen, R³ eine Arylengruppe mit 6 bis 12 Kohlenstoffatomen, m und p 0 oder 1 mit der Maßgabe, daß p und m nicht gleichzeitig 0 bedeuten, q 1 oder 2, B -SCN oder -SH, wenn q=1, und -Sₓ- (wobei ₓ eine ganze Zahl zwischen 2 und 8 ist), wenn q=2,. 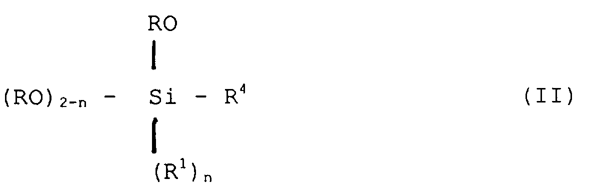 worin bedeuten R eine Alkylgruppe mit 1 bis 4 Kohlenstoffatomen oder eine Alkoxygruppe mit 1 bis 4 Kohlenstoffatomen, R¹ eine Alkylgruppe mit 1 bis 4 Kohlenstoffatomen oder eine Phenylgruppe, n 0, 1 oder 2 und R⁴ einen einwertigen geraden oder verzweigten, ungesättigten Kohlenwasserstoffrest mit 2 bis 20 Kohlenstoffatomen, und die EPDM-Kautschuke, die eine Mooney-Viskosität .MS₁₊₄, 160 °C,zwischen 40 und 80 oder MS₁₊₄, 100 °C, zwischen 60 und 200 aufweisen, sowie einen Weichmacher in einem Knetgerät vermischt, wobei die Alkoxysilane in einer Menge verwendet werden, die gewährleistet, daß 0,1 · 10⁻⁶ bis 13,5 · 10⁻⁶ mol Alkoxysilylgruppen je m spezifischer Oberfläche vorhanden sind, dann das Vulkanisationsmittel und gegebenfalls einen oder mehrere Vulkanisationsbeschleuniger oder sonstige Vulkanisationshilfsmittel hinzufügt und in einem Banbury-Innenmischer oder auf einer Mischwalze weiter mischt.

2. Verfahren gemäß Anspruch 1
dadurch gekennzeichnet, daß man Kieselsäuren und/oder Silikate in einer Menge zwischen 5 und 90 GT, bezogen auf 100 GT Kautschuk, einsetzt.

3. Verfahren gemäß den Ansprüchen 1 und 2
dadurch gekennzeichnet, daß man die Kieseläsure und/oder das Silikat vor dem Einmischen in die Kautschukmischung mit dem Alkoxysilan vermischt oder zur Reaktion bringt.

4. Verfahren gemäß einem oder mehreren der Ansprüche 1 bis 3,
dadurch gekennzeichnet, daß man zusätzlich Ruß mit einer spezifischen Oberfläche zwischen 5 und 90 m/g und/oder mineralische Füllstoffe mit einer spezifischen Oberfläche zwischen 1 und 30 m/g in einer Menge zwischen 0,1 bis 60 bzw. 0,1 bis 100 GT einsetzt.

5. Verfahren gemäß einem oder mehreren der Ansprüche 1 bis 4,
dadurch gekennzeichnet, daß man einen EPDM-Kautschuk mit einer Jodzahl von 8 bis 30 verwendet.

6. Verfahren gemäß einem oder mehreren der Ansprüche 1 bis 5,
dadurch gekennzeichnet, daß man als EPDM-Kautschuk ein Ethylen-Propylen-5-Ethyliden-2-Norbonen-Copolymer einsetzt.

7. Verfahren gemäß einem oder mehreren der Ansprüche 1 bis 6,
dadurch gekennzeichnet, daß man Mischungen mit weiteren kompatiblen Kautschuken oder Kunststoffen einsetzt.

8. Verfahren zur Vulkanisation der Kautschukmischungen gemäß einem oder mehreren der Ansprüche 1 bis 7, dadurch gekennzeichnet, daß man die Mischungen bei einer Temperatur zwischen 100 und 270 °C für die Dauer von 1 bis 150 Minuten je nach Heiztemperatur hält.

## Claims (Claims for the following Contracting State(s): AT, BE, DK, FR, GB, GR, IE, IT, NL, SE)

1. Vulcanizable EPDM rubber mixtures containing an unconjugated ethylene/propylene/diene rubber (EPDM), a crosslinking system containing sulfur or sulfur compounds and at least one of the alkoxysilane compounds corresponding to general formula (I) or (II) below and a silica and/or a silicate with a specific surface of 50 to 100 m/g (BET adsorption; ISO 5794/1, annex D): 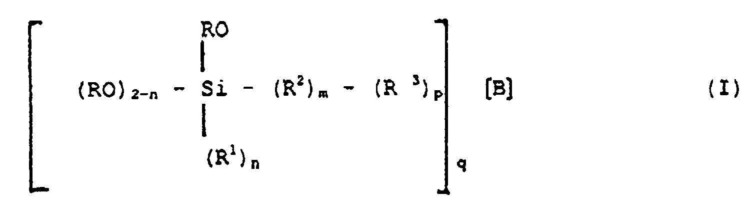 in which R is an alkyl group containing 1 to 4 carbon atoms or an alkoxy group containing 1 to 4 carbon atoms, R¹ is an alkyl group containing 1 to 4 carbon atoms or a phenyl group, n = 0, 1 or 2, R is a difunctional, linear or branched hydrocarbon radical containing 1 to 6 carbon atoms, R₃ is an arylene group containing 6 to 12 carbon atoms, m and p = 0 or 1, with the proviso that p and m cannot both be 0, q = 1 or 2, B represents -SCN or -SH where q = 1 and -Sₓ- (with x = an integer of 2 to 8) where q = 2; 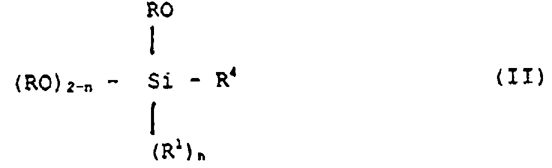 where R is an alkyl group containing 1 to 4 carbon atoms or an alkoxy group containing 1 to 4 carbon atoms, R¹ is an alkyl group containing 1 to 4 carbon atoms or a phenyl group, n = 0, 1 or 2 and R⁴ is a monofunctional, linear or branched unsaturated hydrocarbon radical containing 2 to 20 carbon atoms,
the alkoxysilanes being used in a quantity which ensures that 0.1·10⁻⁶ to 13.5·10⁻⁶ moles of alkoxysilyl groups per m of specific surface are present and the EPDM rubbers having a Mooney viscosity MS₁₊₄/160°C of 40 to 80 or MS₁₊₄/100°C of 60 to 200.

2. Rubber mixtures as claimed in claim 1, characterized in that they contain silicas and/or silicates in a quantity of 5 to 90 pbw per 100 pbw of rubber.

3. Rubber mixtures as claimed in claims 1 and 2, characterized in that the silica and/or the silicate is/are mixed or reacted with the alkoxysilane before incorporation in the rubber mixtures.

4. Rubber mixtures as claimed in one or more of claims 1 to 3, characterized in that they additionally contain carbon black with a specific surface of 5 to 90 m/g and/or mineral fillers with a specific surface of 1 to 30 m/g in a quantity of 0.1 to 60 pbw or 0.1 to 100 pbw.

5. Rubber mixtures as claimed in one or more of claims 1 to 4, characterized in that the EPDM rubber used has an iodine value of 8 to 30.

6. Rubber mixtures as claimed in one or more of claims 1 to 5, characterized in that the EPDM rubber used is an ethylene/propylene/5-ethylidene-2-norbornene copolymer.

7. Rubber mixtures as claimed in one or more of claims 1 to 6, characterized in that the mixtures contain other compatible rubbers or plastics.

8. A process for the vulcanization of the rubber mixtures claimed in one or more of claims 1 to 7 comprising heating the mixtures at a temperature of 100 to 270°C for 1 to 150 minutes, depending on the heating temperature.

## Claims (Claims for the following Contracting State(s): ES)

1. A process for the production of vulcanizable EPDM rubber mixtures containing an unconjugated ethylen/propylene/diene rubber (EPDM), a crosslinking system containing sulfur or sulfur compounds and the usual rubber auxiliaries, characterized in that a silica and/or a silicate with a specific surface of 50 to 100 m/g (BET adsorption; ISO 5794/1, annex D) and at least one of the alkoxysilane compounds corresponding to general formula (I) or (II) below: 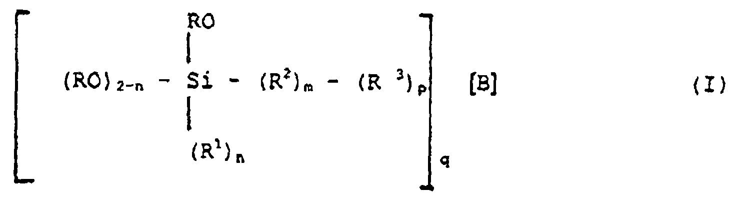 in which R is an alkyl group containing 1 to 4 carbon atoms or an alkoxy group containing 1 to 4 carbon atoms, R¹ is an alkyl group containing 1 to 4 carbon atoms or a phenyl group, n = 0, 1 or 2, R is a difunctional, linear or branched hydrocarbon radical containing 1 to 6 carbon atoms, R³ is an arylene group containing 6 to 12 carbon atoms, m and p = 0 or 1, with the proviso that p and m cannot both be 0, q = 1 or 2, B represents -SCN or -SH where q = 1 and -Sₓ- (with x = an integer of 2 to 8) where q = 2; 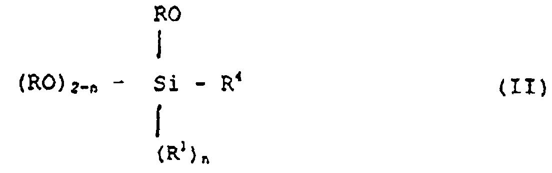 where R is an alkyl group containing 1 to 4 carbon atoms or an alkoxy group containing 1 to 4 carbon atoms, R¹ is an alkyl group containing 1 to 4 carbon atoms or a phenyl group, n = 0, 1 or 2 and R⁴ is a monofunctional, linear or branched unsaturated hydrocarbon radical containing 2 to 20 carbon atoms,
the EPDM rubbers with a Mooney viscosity MS₁₊₄/160°C of 40 to 80 or MS₁₊₄/100°C of 60 to 200 and a plasticizer are mixed in a kneader, the alkoxysilanes being used in a quantity which ensures that 0.1·10⁻⁶ to 13.5·10⁻⁶ moles of alkoxysilyl groups per m of specific surface are present,
after which the vulcanizing agent and optionally one or more vulcanization accelerators and other vulcanization auxiliaries are added and the whole is mixed in a Banbury internal mixer or on mixing rolls.

2. A process as claimed in claim 1, characterized in that silicas and/or silicates are used in a quantity of 5 to 90 pbw per 100 pbw of rubber.

3. A process as claimed in claims 1 and 2, characterized in that the silica and/or the silicate is/are mixed or reacted with the alkoxysilane before incorporation in the rubber mixtures.

4. A process as claimed in one or more of claims 1 to 3, characterized in that carbon black with a specific surface of 5 to 90 m/g and/or mineral fillers with a specific surface of 1 to 30 m/g is/are additionally used in a quantity of 0.1 to 60 pbw or 0.1 to 100 pbw.

5. A process as claimed in one or more of claims 1 to 4, characterized in that an EPDM rubber with an iodine value of 8 to 30 is used.

6. A process as claimed in one or more of claims 1 to 5, characterized in that an ethylene/propylene/5-ethylidene-2-norbornene copolymer is used as the EPDM rubber.

7. A process as claimed in one or more of claims 1 to 6, characterized in that mixtures containing other compatible rubbers or plastics are used.

8. A process for the vulcanization of rubber mixtures as claimed in one or more of claims 1 to 7, characterized in that the mixtures are kept at a temperature of 100 to 270°C for 1 to 150 minutes, depending on the heating temperature.

## Revendications (Revendications pour l'(les) Etat(s) contractant(s) suivant(s): AT, BE, DK, FR, GB, GR, IE, IT, NL, SE)

1. Mélanges de caoutchouc EPDM vulcanisables renfermant un caoutchouc éthylène/propylène/diène (EPDM) non conjugué, un système de réticulation contenant du soufre ou des dérivés du soufre et au moins un des dérivés alcoxysilanes, correspondant aux formules générales suivantes (I) ou (II) ainsi qu'un acide silicique et/ou un silicate ayant une surface spécifique de 50 à 100 m/g (adsorption BET: ISO 5794/1 annexe D). 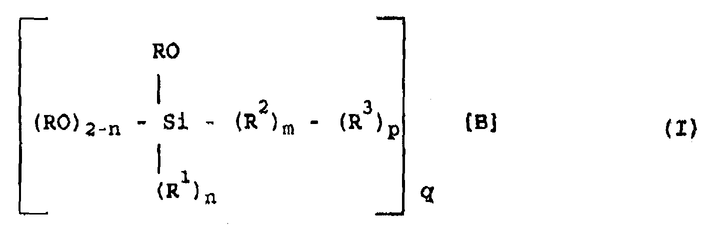 dans laquelle R signifie un groupe alcoyle ayant de 1 à 4 atomes de carbone ou un groupe alcoxy ayant de 1 à 4 atomes de carbone,
R¹ signifie un groupe alcoyle ayant de 1 à 4 atomes de carbone ou un groupe phényle,
n signifie 0,1 ou 2,
R signifie un radical hydrocarboné bivalent ayant de 1 à 6 atomes de carbone,
R³ signifie un groupe arylène ayant de 6 à 12 atomes de carbone,
m et p sont 0 ou 1
avec la réserve que p et m ne signifient pas en même temps 0,
q est 1 ou 2
B est -SCN ou -SH quand q=1
et -Sₓ- (dans laquelle x est un nombre entier entre 2 et 8) quand q=2. 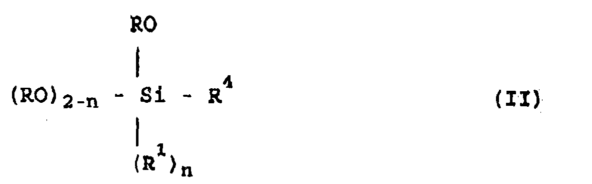 dans laquelle R signifie un groupe alcoyle ayant de 1 à 4 atomes de carbone ou un groupe alcoxy ayant de 1 à 4 atomes de carbone,
R¹ signifie un groupe alcoyle ayant de 1 à 4 atomes de carbone, ou un groupe phényle,
n est 0,1 ou 2, et
R⁴ signifie un radical hydrocarboné univalent, linéaire ou ramifié, non saturé ayant de 2 à 20 atomes de carbone,
dans lesquels les alcoxysilanes sont utilisés en une quantité qui garantit que 0,1·10⁻⁶ à 13,5·10⁻⁶ mol de groupes alcoxysilyle sont présents par m de surface spécifique et les caoutchoucs EPDM possèdent une viscosité Mooney MS₁₊₄ à 160°C entre 40 et 80, ou MS₁₊₄ à 100°C entre 60 et 200.

2. Mélanges de caoutchouc selon la revendication 1, caractérisés en ce qu'ils renferment des acides siliciques et/ou des silicates en quantité comprise entre 5 et 90 GT rapporté à 100 GT de caoutchouc.

3. Mélanges de caoutchouc selon les revendications 1 et 2, caractérisés en ce que l'acide silicique et/ou le silicate est mélangé avant l'introduction par mélange dans le mélange de caoutchouc avec l'alcoxysilane et ils sont amenés en réaction.

4. Mélanges de caoutchouc selon l'une ou plusieurs des revendications 1 à 3, caractérisés en ce qu'ils renferment en supplément du noir de fumée ayant une surface spécifique comprise entre 5 et 90 cm/g et/ou des substances de charge minérales ayant une surface spécifique comprise entre 1 et 30 m/g en quantité comprise entre 0,1 et 60 ou 0,1 et 100 GT.

5. Mélanges de caoutchouc selon l'une ou plusieurs des revendications 1 à 4, caractérisé en ce que le caoutchouc EPDM utilisé possède un indice d'iode allant de 8 à 30.

6. Mélanges de caoutchouc selon l'une ou plusieurs des revendications 1 à 5, caractérisés en ce que le caoutchouc EPDM utilisé est un copolymère éthylène/propylène/5-éthylidène-2-norbornène.

7. Mélanges de caoutchouc selon l'une ou plusieurs des revendications 1 à 6, caractérisés en ce que les mélanges renferment d'autres caoutchoucs compatibles ou des matières plastiques.

8. Procédé de vulcanisation des mélanges de caoutchouc selon l'une ou plusieurs des revendications 1 à 7 qui maintient le chauffage des mélanges à une température comprise entre 100 et 270°C pour une durée de 1 à 150 min, selon la température de chauffage.

## Revendications (Revendications pour l'(les) Etat(s) contractant(s) suivant(s): ES)

1. Procédé d'obtention de mélanges de caoutchouc EPDM vulcanisables renfermant un caoutchouc éthylène/propylène/diène (EPDM) non conjugué, un système de réticulation contenant du soufre ou des dérivés du soufre et les adjuvants usuels de caoutchouc, caractérisé en ce que l'on mélange un acide silicique et/ou un silicate ayant une surface spécifique de 50 à 100 m/g (adsorption BET: ISO 5794/1 Annexe D) et au moins un des dérivés alcoxysilanes correspondant à la formule générale (I) ou (II) : 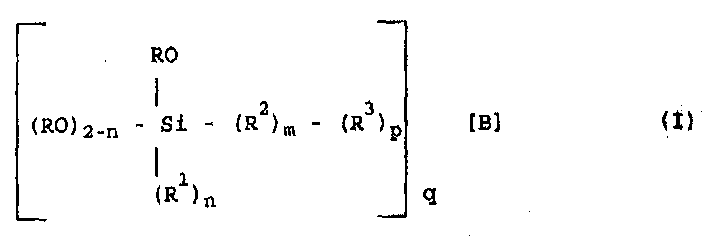 dans laquelle R signifie un groupe alcoyle ayant de 1 à 4 atomes de carbone ou un groupe alcoxy ayant de 1 à 4 atomes de carbone,
R¹ signifie un radical alcoyle ayant de 1 à 4 atomes de carbone ou un groupe phényle,
n est 0,1 ou 2,
R signifie un radical hydrocarboné bivalent ayant de 1 à 6 atomes de carbone,
R³ signifie un groupe arylène ayant de 6 à 12 atomes de carbone,
m et p sont 0 ou 1
avec la restriction que p et m ne signifient pas en même temps 0,
q est 1 ou 2
B est SCN ou SH quand q=1 et Sₓ (dans laquelle x est un nombre entier entre 2 et 8) quand q=2. 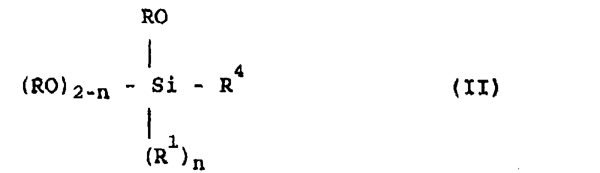 dans laquelle R signifie un radical alcoyle ayant de 1 à 4 atomes de carbone ou un groupe alcoxy ayant de 1 à 4 atomes de carbone,
R¹ signifie un radical alcoyle ayant de 1 à 4 atomes de carbone, ou un groupe phényle,
n est 0,1 ou 2, et
R⁴ signifie un radical hydrocarboné non saturé univalent, linéaire ou ramifié, ayant de 2 à 20 atomes de carbone
et les caoutchoucs EPDM, qui possèdent une viscosité Mooney MS₁₊₄ à 160°C entre 40 et 80 ou MS₁₊₄ à 100°C entre 60 et 200 ainsi qu'un agent plastifiant dans un appareil de malaxage dans lequel les alcoxysilanes sont utilisés en une quantité qui garantit que 0,1·10⁻⁶ à 13,5·10⁻⁶ mol de groupes alcoxysilyle sont présents, puis on ajoute l'agent de vulcanisation et éventuellement un ou plusieurs accélérateurs de vulcanisation ou d'autres adjuvants de vulcanisation et on mélange encore dans un mélangeur interne Banbury ou sur un cylindre de mélange.

2. Procédé selon la revendication 1, caractérisé en ce que l'on met en oeuvre des acides siliciques et/ou des silicates en quantité comprise entre 5 et 90 GT rapporté à 100 GT de caoutchouc.

3. Procédé selon les revendications 1 et 2, caractérisé en ce que l'on mélange les acides silicique et/ou silicate avant l'introduction par mélange dans le mélange de caoutchouc, avec l'alcoxysilane ou on l'amène en réaction.

4. Procédé selon une ou plusieurs des revendications 1 à 3, caractérisé en ce que l'on met en oeuvre en supplément du noir de fumée ayant une surface spécifique comprise entre 5 et 90 m/g et/ou des substances de charge minérales ayant une surface spécifique comprise entre 1 et 30 m/g en quantité comprise entre 0,1 et 60 ou 0,1 et 100 GT.

5. Procédé selon une ou plusieurs des revendications 1 à 4, caractérisé en ce que l'on utilise un caoutchouc EPDM ayant un indice d'iode de 8 à 30.

6. Procédé selon une ou plusieurs des revendications 1 à 5, caractérisé en ce que l'on met en oeuvre un copolymère éthylène/propylène/5-éthylidène 2-norbornène.

7. Procédé selon une ou plusieurs des revendications 1 à 6, caractérisé en ce que l'on met en oeuvre des mélanges avec d'autres caoutchouc compatibles ou des matières plastiques.

8. Procédé de vulcanisation des mélanges de caoutchouc selon une ou plusieurs des revendications 1 à 7, caractérisé en ce que l'on maintient les mélanges à une température comprise entre 100 et 270°C pendant une durée de 1 à 150 minutes selon la température de chauffage.
